# EUROPEAN PATENT SPECIFICATION

(11) **EP 0 325 081 B1**
(45) Date of publication and mention of the grant of the patent: **26.02.1997**
(21) Application number: 88480076.4
(22) Date of filing: 22.11.1988
(51) Int. Cl.: G06F 3/023, G06F 17/18

(54) **Graphical access to statistical processing**
Graphischer Zugang zu einer statistischen Verarbeitung
Accès graphique à un traitement statistique

(30) Priority: 23.12.1987 US 137137
(43) Date of publication of application: 26.07.1989
(73) Proprietor: International Business Machines Corporation, Armonk, N.Y. 10504 (US)
(72) Inventor: Torres, Robert J., Colleyville Texas 76034 (US)
(74) Representative: Therias, Philippe

(56) References cited:
- EP-A- 0 249 961
- STATISTICAL AND SCIENTIFIC DATABASE MANAGEMENT, 4TH INTERNATIONAL WORKING CONFERENCE, Rome, 27th - 30th June 1988, SSDM PROCEEDINGS, pages 314-326,Springer-Verlag, Berlin, DE; E. MALMBORG: "Design of the user-interface for an object-oriented staticstical data-base"
- CONFERENCE ON OBJECT ORIENTED PROGRAMMING SYSTEMS, LANGUAGES AND APPLICATIONS, Orlando, Fl, 4th - 8th October 1987, SIGPLAN NAT. (USA), vol. 22, no. 12, December 1987, pages 307-317; S.H. GUTFREUND: "Maniplicons in thinkertoy"

## Description

### BACKGROUND OF THE INVENTION

### Field of the Invention

The present invention generally relates to a system for providing a statistical processing function across multiple independent application programs running on a computer and, more particularly, to a technique for the automated access of statistical processes via selection of a graphic icon while viewing and manipulating data in tables.

### Description of the Prior Art

In the prior art, there are various programs that allow users to develop tabular data structures. For example, users have access to programs for organizing data into spreadsheets, matrices, vectors, or other forms of tables. Some programs allow users to invoke statistical processing capabilities on designated collections of data. Examples of such statistical computations include totals, arithmetic means, standard deviations, and so forth. Users can then attach the statistical data to the table for purposes of reporting results.

In the document: Conference on Object Oriented Programming Systems, Languages and Applications, Orlando, Fl, 4-8.10.1987, SIGPLAN Nat. (USA), vol.22, no.12, December 1987, pages 307-317, is described a graphical environment for modeling decision support problems.

But all known current approaches have several problems from the user's point of view. First, access of statistical programs is typically hidden from the user. Second, once accessed, the statistical programs are difficult to learn, use and remember. Third, access to statistical computations is limited to specific programs, as opposed to having more general access and use in other applications. Fourth, the available interaction style for statistical programs are inconsistent with the base interaction style of other programs in the computer system.

The impact of these problems with current implementation is that extra time is required for users to learn how to use the statistical programs. The inconsistency between interaction styles of these and other conventional computer programs causes learning problems and user errors. Additionally, the access to these functions is typically limited to the more experienced users of the programs, as opposed to having a broader and easier access for casual and novice users who also need the function. The current approaches do not aid even the most experienced user to perform the function that is desired; i.e., perform quick statistical analyses of data of different types and in different locations in the data structure.

### SUMMARY OF THE INVENTION

It is therefore an object of the subject invention to provide a unique method and system for the visual presentation of potentially valid statistical computations for a set of data via a graphical icon display.

It is another object of the instant invention to provide a technique for the visual presentation of valid statistical computations for a specifically selected set of data.

It is a further object of the present invention to provide for the automatic computation of statistical results based upon selection of a set of data and a valid statistical process.

It is yet another object of the invention to provide a system for the direct visual selection and manipulation of statistical results via icon selection and movement.

It is still a further object of the invention to provide for the direct visual placement of a statistical result at a desired display location either with the data or at another location on a display screen.

Still another object of the invention is the provision of a technique for the automatic updating of statistical results based upon changes in data input by the user.

According to the invention as defined in claim 1, the automatic access, processing and displaying of statistical computations is simplified and rendered dynamic and interactive for the user thereby facilitating the completion of the task being performed. The user need not be capable of performing the various statistical computations and tests as the computation of statistical values of data is performed automatically and under system control based upon user selection of data objects and user selection of graphic icon representations of valid statistical processes for the data. Statistical results are displayed automatically under system control in response to the user performing a "grab and drag" operation on an icon for the desired statistical result and placing the icon in the desired display location. Improved statistical processing of data is thus facilitated by permitting the user to view a collection of valid statistical processes side-by-side with the data the user is viewing and manipulating. The user can choose to view the statistical result by selecting the desired statistical process from a graphic icon display representing valid choices and "dragging" the icon for the statistical process to the body of the data display.

The benefits of the invention include user enhanced learning of the functions of the computer system by having visual presentation of system supported statistical processes and computations. The user is not required to memorize computer procedures or input a complex series of keystrokes in order to invoke the statistical functions of the invention. This makes those functions accessible to novice and casual users as well as to more experienced and sophisticated users, and no matter what the skill level of the user, errors are reduced as a result of the visual interface which allows only the selection of valid statistical options for selected sets of data.

### BRIEF DESCRIPTION OF THE DRAWINGS

The foregoing and other objects, aspects and advantages of the invention will be better understood from the following detailed description of a preferred embodiment of the invention with reference to the drawings, in which:
Figure 1 is an illustration of a computer display screen showing a typical data set in a table format;
Figure 2 is an illustration of the computer display screen of Figure 1 showing the addition of a statistical attribute bar for selection of valid statistical processing associated with the data in the table;
Figure 3 is an illustration of the computer display screen of Figure 2 showing the result of a marking action of data in the table and its consequent effect on the statistical attribute bar;
Figures 4, 5 and 6 are each illustrations of the computer display screen in sequence 3 showing, respectively, the selection of a statistical icon from the icon menu, the placing of the selected icon in the table, and the result of the statistical computation; and
Figure 7 is a flow chart illustrating the logic of the internal system functions required to implement the invention.

### DETAILED DESCRIPTION OF A PREFERRED EMBODIMENT OF THE INVENTION

The description of the invention will be aided by certain definitions of terms. Presentations of information and/or selections to users on a computer display device are called menus. All programs which run on a computer system have one or more such menus. The selections provided in a menu may lead to other menus or contain other information for data entry or manipulation. The sequence of menus that a user traverses in the course of running a computer program is referred to as a menu hierarchy.

An object attribute is a characteristic of a computer system entity. All objects have attributes. Data in tables and other organizational structures have statistical attributes; e.g., arithmetic means, standard deviation, sum, regression coefficients and the like. These statistical attributes typically have symbolic representations as indicated below:
Sum = Σ
Mean = µ
Standard Deviation = σ
Regression Coefficient = R2

The visual presentation of object attribute information via icons is called an attribute bar. Attribute bars typically have been used for selection of colors, input modes and input styles in graphic drawing programs.

The "statistical attribute bar" used in the preferred embodiment of the invention is a technique for the graphical representation and presentation by means of icons of valid statistical processes associated with numeric data. Users can select a graphic icon representation of a statistical process, and the value of the statistical process is automatically computed. The user can also "drag" the icon and place it at a desired location for displaying the computed statistical value in the data table or other location on the display screen.

The most common operations using the statistical attribute bar are inputting data into some data structure, automatically displaying the valid statistical attributes associated with the collection of data, marking a subset of the data to view the valid statistical attributes associated with the subset, selecting a valid statistical icon from the statistical attribute bar, dragging the icon to a display position on the screen, and repeating one or more of the above steps as may be required by the user.

The preferred implementation of the invention is on a personal computer, such as the IBM Personal System/2 family of computers. The computer should include a bit mapped or all points addressable (APA) graphics display and a mouse or other pointing device as the preferred selection mechanism. The personal computer system is provided with a display management system, a multitasking environment, and a windowing system to support multitasking with multiple application programs. These requirements are provided with, for example, Microsoft's Windows(TM) program. The windowing system supports the use of a command bar for selection of actions, as well as supporting multiple scrollable areas within each window.

Software applications supported include data definition processors for contructing data storage structures which contain the numeric data to be processed. Statistical processing applications are available for computation of the statistical attributes of the data contained in the data structures. Graphic presentation routines are provided in order to display the representations of the statistical attributes in graphical icon form. Those skilled in the art will recongnize that all the system requirements listed above are conventional and well known in the art; therefore, details of these system requirements will not be discussed further.

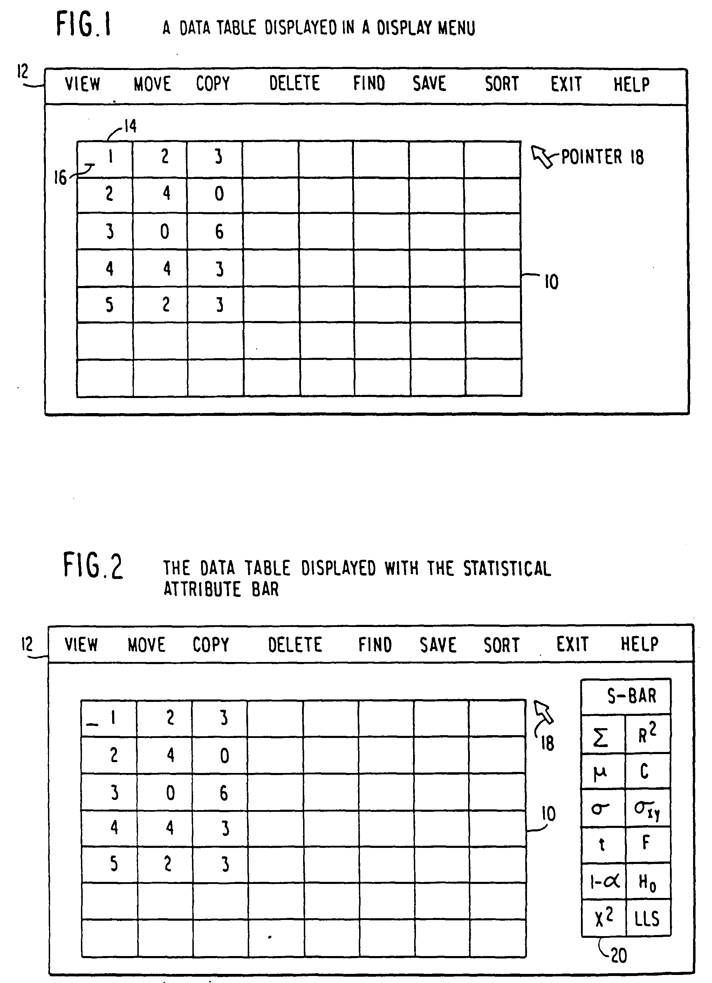

Referring now to the drawings, and more particularly to Figure 1, there is shown an example of a data table 10 displayed in a window. The window has a conventional command bar 12 for selection of actions to apply to the table and its content. The window is itself displayed on the computer screen. The table 10 is displayed with a grid indicating columns, rows and cells, the latter being the intersections of columns and rows. The table 10 also contains three columns of user data. The first cell 14 of the table shows a keyboard cursor 16 indicated by the single underline, and this cursor would typically be used to move from cell to cell, by means of the arrow keys on the computer keyboard, for the inputing and editing of data in the table. At the upper right hand corner of the table there is shown a pointing cursor 18 in the form of an arrow. This cursor is controlled by a pointing device such as a mouse and can be positioned at any point on the display screen, including the table 10 and the command bar 12. In the latter case, the arrow symbol disappears and one of the command functions is highlighted by reverse video, for example, to show the user the current position of the pointing cursor. The procedure for moving the pointing cursor is to physically move the mouse in the desired direction. The mouse typically has one or more buttons which can be pressed to indicate to the computer a user input selection.

Figure 2 shows the result of displaying the statistical attribute bar 20. The statistical attribute bar 20 was displayed via a selection on the command bar 12, e.g., View, or by pressing a key sequence on the keyboard, e.g., Alt + S for view "statistical attribute bar". The statistical attribute bar 20 displays, in the form of icons, statistical attributes associated with data in the table as a whole and as collections of data as, for example, columns or rows of data. The statistical attribute bar 20 can be implemented as a scrollable viewport in order to display more data attributes than can be shown on the display device at one time. Scrolling would be indicated by the use of scroll bars within the viewport. Besides scrolling the statistical attribute bar 20, the user can also scroll the data table 10 separately from the attribute bar.

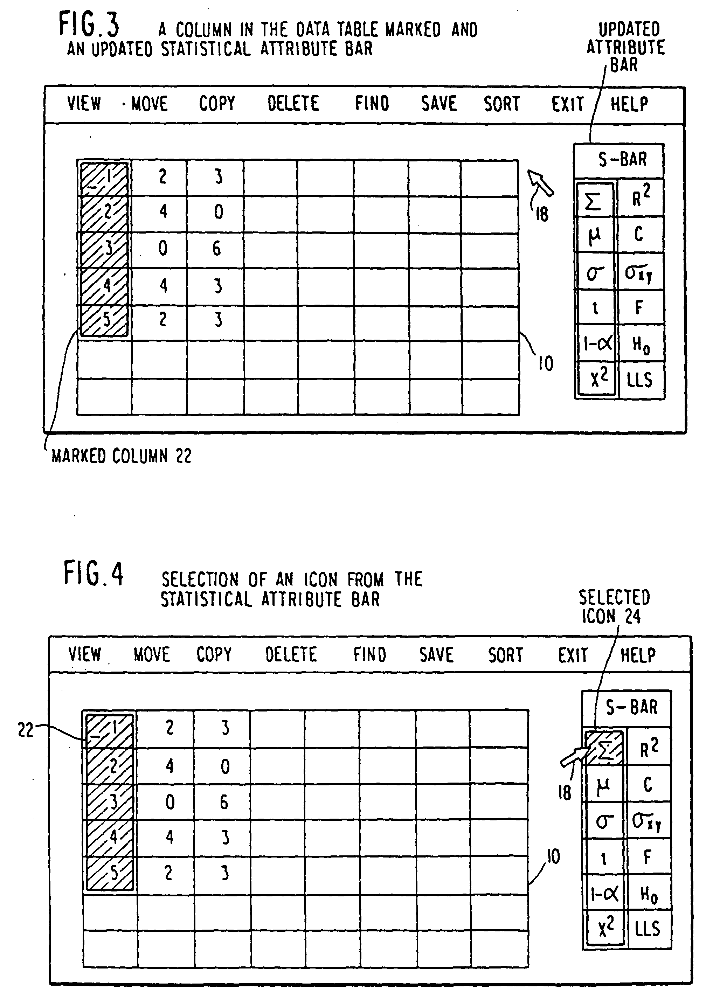

Figure 3 shows the effect of the user having marked a column 22 of data in the table 10 via conventional marking techniques with the pointing cursor, for example. The column 22 is shown highlighted as by drawing a bright line around the column. The statistical attribute bar 20 updates automatically and under system control to indicate by highlighting as by drawing a bright line around the icons corresponding only to the valid statistical processes associated with the marked column 22 of data. The user can still perform other actions at this time. For example, the user can add or update data in the cells of the column 22, and the user can perform other editing functions including move, copy or delete the column.

Figure 4 shows selection of an icon 24 from the statistical attribute bar 20. In the illustrated case, the user has selected the "sum" icon from the attribute bar 20 by moving the pointing cursor 18 to the icon 24 representing the statistical process for summing and pressing a button on the mouse to indicate the selection. When the pointing cursor 18 is placed on the icon 24, the icon is highlighted by reverse video to show the user the statistical process that would be selected by pressing the button on the mouse. Only those icons corresponding to valid statistical operations for the marked data can be selected so that even if the user moves the pointing cursor 18 to one of the icons not within the marked outline of valid icons, that icon will not be highlighted and can not be selected.

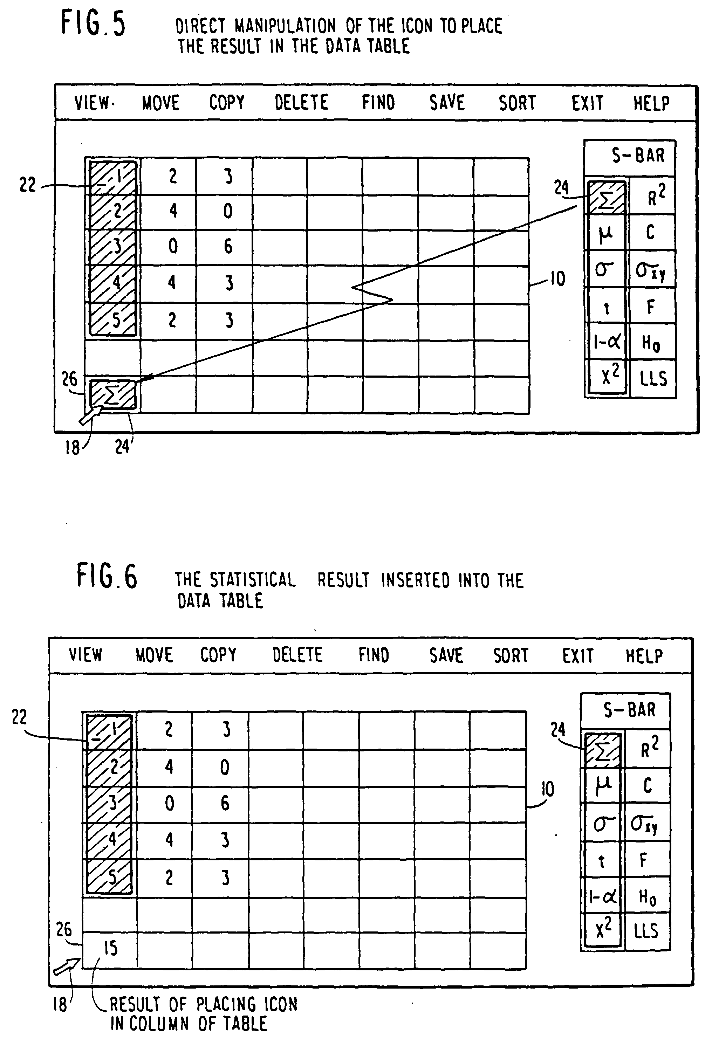

Figure 5 shows the direct manipulation of the icon 24 from the statistical attribute bar using the pointing cursor 18 and a "press and hold" operation of the mouse button, for example, to "drag" a copy of the icon 24 to a desired display point. In the illustrated example, the user drags the icon across the table and into a cell 26 in the column 22 of the table 10. The user could just as easily have moved the icon to another position on the display, including another window supporting a different application program.

Figure 6 shows the final result of the operation. The user, having positioned the sum icon 24 in the table using the pointing cursor 18, released the mouse button causing the result of the statistical computation to be displayed in the cell 26. Further operations on the data in the marked column 22 automatically result in an update of the sum in cell 26. The column 22 of data may remain shown as marked in case further operations are desired, and the statistical attribute bar 20 continues to show valid operations for the column 22. The sum icon 24 may also be shown as selected in case the user wishes to repeat the operation for another column. Both the column 22 and sum icon 24 can be deselected via conventional deselection techniques, the result of which would be a return to the display shown in Figure 2.

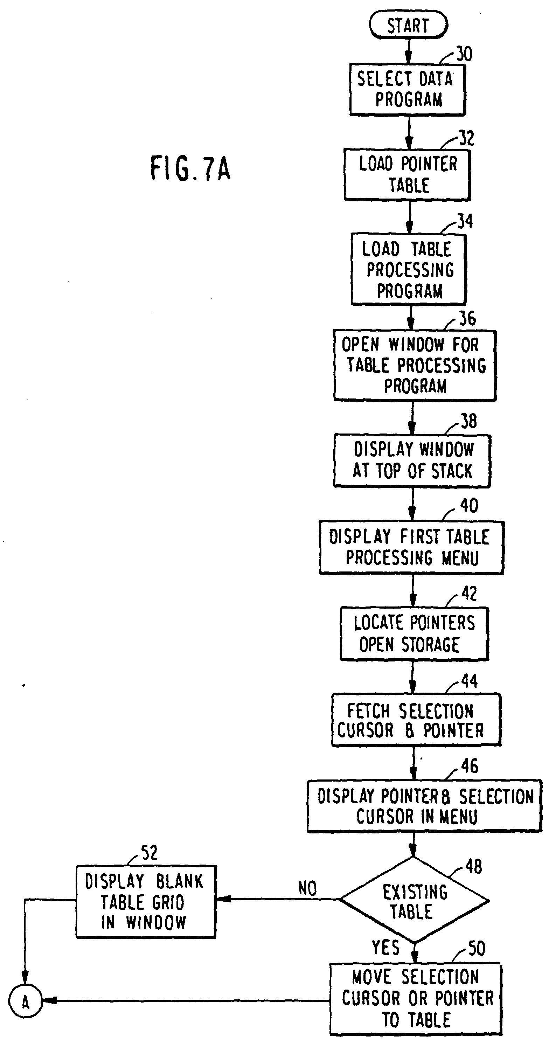

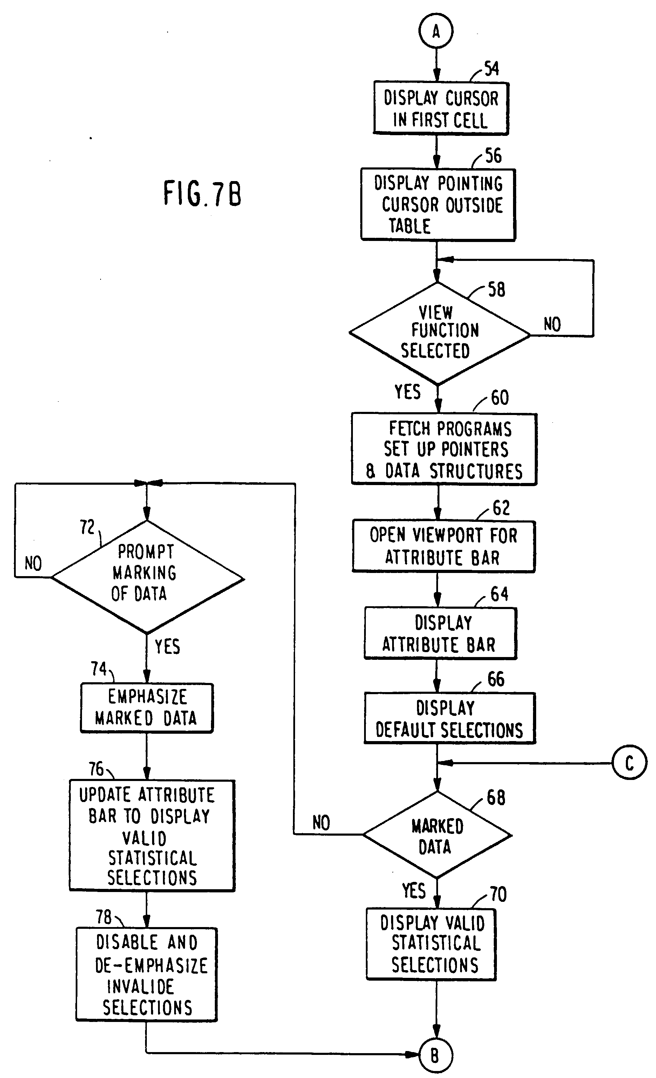

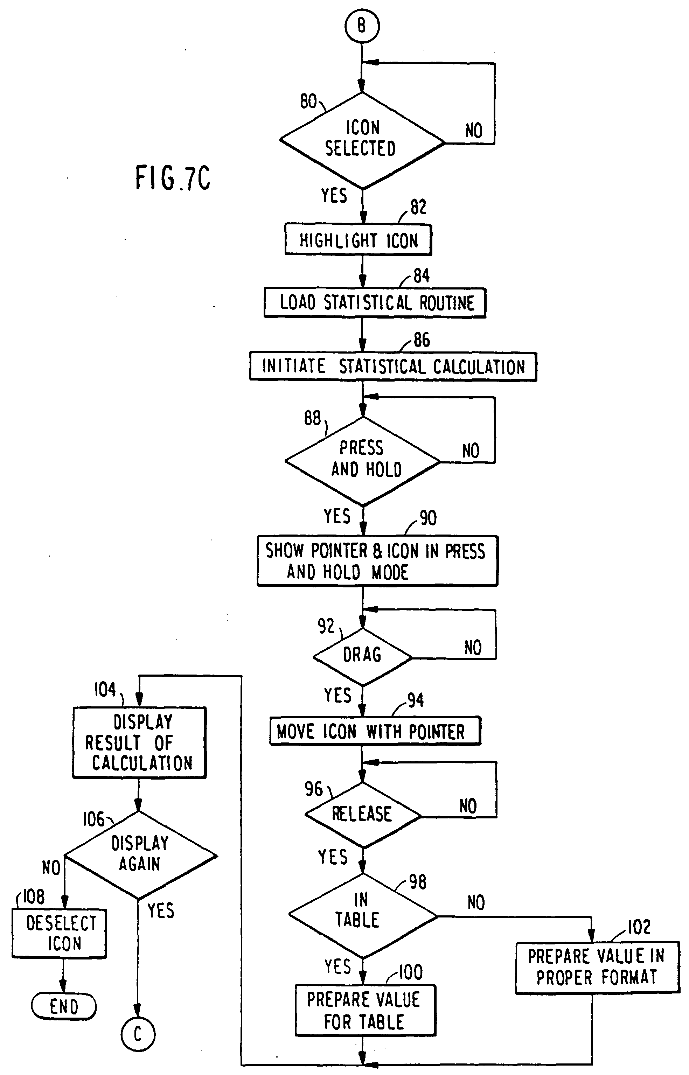

Reference is now made to the flow chart of Figure 7 which shows the logic of the system functions required to implement the invention. The process starts with the selection of the data program from the main menu, as indicated in function block 30. Then, in function block 32, the table containing the pointers to storage locations for existing data tables and table processing programs are loaded and, in function block 34, the table processing program is loaded. Next, in function block 36, a window is opened to display the table processing program windows, the table processing window is displayed at the top of the window stack in function block 38, and the first table processing menu is displayed in that window in function block 40. The pointers are located and the storage required to support the statistical process in function block 42. The selection cursor and pointer are fetched in function block 44, and the pointer and selection cursor are displayed in the menu in function block 46. A test is then made in decision block 48 to determine if a previously existing table has been selected. If so, the selection cursor or pointer is moved to the table to be processed in function block 50. Selection is accomplished by pressing the Enter key and results in erasing the content of the menu, locating the format for the filled in table, locating data for selection from the menu, and displaying data in the grid in the window. On the other hand, if a previously existing table has not been selected, the content of the menu is erased, the format for a blank table is located, and a blank table grid is displayed in the window in function block 52. In either case, the cursor is displayed in the first cell 14 of the table 10 in function block 54, and the pointing cursor 18 is displayed on the outside of the table in function block 56. At this point, the display is essentially as shown in Figure 1. It will, of course, be understood that if a previously existing table is not selected, the grid shown in Figure 1 would be empty.

Now, the system monitors the user input to determine if the view function is selected in the command bar 12 at the top of the screen, as indicated by decision block 58. If the view function is selected, programs are fetched and pointers and storage structures are set up to support the selected function in function block 60. Then, a viewport is opened in function block 62 for the statistical attribute bar inside the data window, and in function block 64, the attribute bar 20 is displayed in the data window adjacent the table 10. The default selections in the attribute bar are displayed in function block 66. At this point, the display screen appears as shown in Figure 2. The system then makes a test in decision block 68 to determine if data in the table has already been marked. If so, only the valid statistical selections for the marked data are displayed in function block 70. Otherwise, the system monitors user input to mark data in the table in decision block 72. When data is marked, the marked data is highlighted in function block 74, the attribute bar 20 is updated in function block 76 to display only valid statistical selections for the data marked, and the invalid selections are disabled and de-emphasized in the attribute bar in function block 78. At this point, the display screen appears as shown in Figure 3.

The system next monitors user input for the selection of an icon from the attribute bar in decision block 80. When an icon is selected, the selected icon is displayed with an enhanced emphasis in function block 82, the corresponding statistical processing routine is loaded in function block 84, and the statistical calculating routine is initiated in function block 86. The display screen appears as shown in Figure 4. As described earlier, the calculation proceeds immediately without any further input from the user. Therefore, the system now monitors user input to determine where the result of the calculation is to be displayed. This is done by testing for a "press and hold" operation in decision block 88, and when this operation is detected, the pointing cursor and the selected icon are displayed in a manner to indicate that they are in the "press and hold" mode in function block 90. This is followed by the system monitoring the user input in decision block 92 to detect a "drag" operation with the pointing device. When the "drag" operation is detected, the icon is shown being moved across the window in the desired direction attached to the pointing cursor, as indicated in function block 94 and shown in Figure 5. During this operation, the system monitors the user input to determine if a release has been made from the press and hold and drag operations, as indicated in function block 96. When a release is detected, a test is made in decision block 98 to determine if the release is-in the table. If so, then in function block 100, the statistical data is prepared for display in the table as shown in Figure 6; otherwise, the statistical data is prepared for display in the proper format as determined by the application program. Then, the result of the statistical calculation is displayed in function block 104. If the calculation is not yet complete, the system can display an icon or message to the user indicating that the calculation is in progress, and then when the calculation is complete, the result is displayed at the indicated location. Finally, the system prompts the user in decision block 106 to enter whether to display again. If not, the icon is deselected in function block 108 before ending; but if so, control returns to decision block 68 to repeat the process.

Set out below is a program written in Program Design Language (PDL) from which a programmer skilled in the art can readily write source code in a computer language such as BASIC, Pascal or C supported by the computer. This program is usable by the computer in the navigation and interaction with the statistical attribute bar.

START With start up of system Load start up programs and operating system Allocate memory for Program Pointer Table Load Program Pointer Table Initialize display buffers Set up storage for Main Menu Call FIND Menu program for Main Menu Open window for Main Menu Display Main Menu in window Fetch cursor and pointer for Main Menu Display pointer and cursor for Main Menu Highlight first program on Main Menu

If Data Program selected from Main Menu, then
Search Program Pointer Table for Data
   Program
Allocate memory for Data Program, buffers,
   tables
Load Data Program
Initialize buffers and tables
Call FIND MENU for initial Data Program
   menu
Open window for Data Program Menu
Place window on top of window stack
Create list of existing data tables
Update Data Program menu with list of
   tables
Update display buffer with Data Program
   menu
Call DISPLAY MENU program
Display initial Data Program menu
Fetch selection cursor and pointer
Display cursor on first table in Data
   Program menu
Display pointer adjacent to selection
   cursor

Load pointers to statistical programs Allocate memory for statistical programs Load pointers to existing data tables

CASE OF: Select existing data table

If selection cursor on existing data table, then
Call HIGHLIGHT selection cursor If select "View" existing data table action from command bar, then
Allocate memory for selected table
Call FIND MENU program for table display
   format
Find data table in storage
Create display buffer for data table
Call ERASE window content
Call DISPLAY MENU program
Display data table in Data Program window
Display data cursor in first cell of table
Display pointer adjacent to table If select "View Statistical Attribute Bar", then
Allocate memory for attribute bar
Load attribute bar programs
Call FIND MENU program for attribute bar
   display format
Call TEST TABLE program to determine valid
   statistics
Initialize attribute bar to state of
   current table
Update display buffer for attribute bar
   image
Display updated display buffer for table
   and attribute bar
Display selection cursor in attribute bar If table cells (columns and/or rows) selected via
cursor or pointer
Call TEST TABLE program to determine valid
   statistics
If valid statistics have changed, then
   Call UPDATE ATTRIBUTE BAR program
   Update display buffer for attribute
      bar image
   Display updated table and attribute
      bar

If an Attribute Bar statistic icon is selected via
cursor or pointer
Call HIGHLIGHT selection program
Update display buffer for selection
Display updated buffer for attribute bar If pointer "press and hold" selected on attribute
bar
Call REPLACE POINTER program
Display updated pointer (mouse pointer and
selected icon) If pointer moves with "press and hold" condition
Call MOVE POINTER program
Display updated pointer moving with pointer
   motion If pointer "press and hold" is terminated
Call SEARCH TABLE routine
Determine parameters for input to
   statistics program
Call COMPUTE STATISTIC program
Create display format for statistic
Update display buffer for statistical
   result
Call REPLACE POINTER program
Replace pointer-icon image with pointer
   image in display buffer
Display statistical result in window END

The following are not expanded since they are handled by conventional techniques in the current art:

CASE OF: Create New Table CASE OF: Delete, copy, move, print, etc part or all of a table CASE OF: Update data in table and recompute statistics.

## Claims

1. A method of adapting a computing environment from conventional programs to statistical programs, said computing environment comprising:
- capability of displaying a plurality of windows on a computer screen,
- a data table (10) for display in a first of said plurality of windows,
- a keyboard cursor (18) for display in said screen controlled by a pointing device and allowing a user to input/delete/edit/select subsets of data of said data table, to drag and drop icons in said screen, and
- a statistical attribute bar (20) for display in said first window, and representing, in the form of icons, statistical processes associated with data in said data table,
said method being characterized in that it comprises the computer performed steps of:
- allowing said user to select a subset (22) of data in said data table,
- automatically updating said statistical attribute bar by highlighting a subset of icons corresponding only to the valid statistical processes associated with said subset of data,
- allowing said user to select one icon (24) from said subset of icons,
- allowing said user to drag a copy of said one icon to a display point on said screen,
- automatically displaying at said display point when said user drops said icon the result of the statistical process corresponding to said icon when applied to said subset of data, and
- automatically updating said result when said user updates said subset of data.

2. The method of claim 1 characterized in that said display point lies in a second of said plurality of windows.

## Patentansprüche

1. Verfahren zum Anpassen einer Computerumgebung herkömmlicher Programme für statistische Programme, wobei die Computerumgebung beinhaltet:
- Die Fähigkeit zum Anzeigen einer Vielzahl von Fenstern auf einem Computerbildschirm,
- eine Datentabelle (10) zur Anzeige in einem ersten dieser Vielzahl von Fenstern,
- einen Tastatur-Cursor (18) zur Anzeige auf diesem Bildschirm, gesteuert von einer Zeigervorrichtung, und der es ermöglicht, daß ein Anwender Daten-Teilmengen dieser Datentabelle eingibt/löscht/bearbeitet/anwählt, Bildsymbole auf dem Bildschirm zieht und ablegt, und
- einen Balken (20) für statistische Attribute zur Anzeige in dem ersten Fenster und zur Veranschaulichung statistischer Prozesse, die den Daten in der Datentabelle zugeordnet sind, in der Form von Bildsymbolen,
wobei das Verfahren dadurch gekennzeichnet ist, daß es die folgenden vom Computer durchgeführten Schritte umfaßt:
- Zulassen, daß der Anwender eine Daten-Teilmenge (22) in der Datentabelle anwählt,
- automatisches Aktualisieren des statistischen Attributbalkens durch Hervorheben einer Teilmenge von Bildsymbolen, die nur den der Daten-Teilmenge zugeordneten gültigen statistischen Prozessen entsprechen,
- Zulassen, daß der Anwender ein Bildsymbol (24) in der Bildsymbol-Teilmenge anwählt,
- Zulassen, daß der Anwender eine Kopie des Bildsymbols zu einem Anzeigepunkt auf dem Bildschirm zieht,
- automatisches Anzeigen des Ergebnisses des diesem Bildsymbol entsprechenden statistischen Prozesses bei Anwendung desselben auf die Daten-Teilmenge an diesem Anzeigepunkt, sobald der Anwender das Bildsymbol ablegt, und
- automatisches Aktualisieren dieses Ergebnisses, wenn der Anwender die Daten-Teilmenge aktualisiert.

2. Das Verfahren gemäß Anspruch 1, dadurch gekennzeichnet, daß dieser Anzeigepunkt in einem zweiten der Vielzahl Fenster liegt.

## Revendications

1. Un procédé d'adaptation d'un environnement de calcul, afin de passer de programmes classiques à des programmes statistiques, ledit environnement de calcul comprenant :
- une possibilité d'affichage d'une pluralité de fenêtres sur un écran d'ordinateur,
- une table de données (10) destinée à afficher une première fenêtre parmi ladite pluralité,
- un curseur de clavier (18), destiné à s'afficher dans ledit écran sous la commande d'un dispositif pointeur et à permettre à un utilisateur d'introduire/supprimer/éditer/sélectionner des sous-jeux de données de ladite table de données, de faire glisser et placer des icônes dans ledit écran, et
- une barre d'attributs statistique (20) destinée à l'affichage dans ladite première fenêtre, et représentant, sous la forme d'icônes, des processus statistiques associés à des données se trouvant dans ladite table de données,
ledit procédé étant caractérisé par le fait qu'il comprend les étapes, effectuées par l'ordinateur, consistant à :
- permettre audit utilisateur de sélectionner un sous-jeu (22) de données dans ladite table de données,
- mettre à jour automatiquement ladite barre d'attributs statistique en mettant en valeur un sous-jeux d'icônes correspondant seulement au processus statistique valide associé audit sous-jeu de données,
- permettre audit utilisateur de sélectionner une icône (24) parmi ledit sous-jeu d'icônes,
- permettre audit utilisateur de faire glisser une copie de ladite une icône sur un point d'affichage se trouvant sur ledit écran,
- afficher automatiquement audit point d'affichage, lorsque ledit utilisateur choisit ladite icône, le résultat du processus statistique correspondant à ladite icône lorsqu'il est appliqué audit sous-jeu de données, et
- mettre au jour automatiquement ledit résultat lorsque ledit utilisateur met à jour ledit sous-jeu de données.

2. Le procédé selon la revendication 1, caractérisé en ce que ledit point d'affichage est situé dans une deuxième fenêtre parmi ladite pluralité de fenêtres.
